# EUROPEAN PATENT APPLICATION

(11) **EP 4 618 407 A1**
(43) Date of publication of application: **17.09.2025**
(21) Application number: 23899394.3
(22) Date of filing: 30.06.2023
(51) Int. Cl.: H02S 30/20, H02S 40/38, H02S 40/32

(54) **PORTABLE PHOTOVOLTAIC ARRAY GENERATOR SET CONTAINER AND UTILIZATION METHOD THEREOF**

(30) Priority: 08.12.2022 CN 202211587313
(71) Applicant: Senta Energy Co., Ltd, Wuxi, Jiangsu 214174 (CN)
(72) Inventor: SHEN, Xiaobo, Wuxi, Jiangsu 214174 (CN); DING, Mingliang, Wuxi, Jiangsu 214174 (CN); JIANG, Rui, Wuxi, Jiangsu 214174 (CN); HUA, Xuan, Wuxi, Jiangsu 214174 (CN)
(74) Representative: Chung, Hoi Kan
(86) International application number: PCT/CN2023/105156
(87) International publication number: WO 2024/119807

(57) **Abstract**

The present application discloses a portable photovoltaic array generator set container and a use method thereof. The portable photovoltaic array generator set container includes a folding photovoltaic power generation unit, a rail assembly through which the folding photovoltaic power generation unit stretches or contracts, an electrical device, and a container. The folding photovoltaic power generation unit includes a plurality of frames, a solar photovoltaic assembly, a hinge assembly, and a traversing assembly. The folding photovoltaic power generation unit further includes a limiting assembly for limiting a stretching angle of each group of frames.

## Description

### TECHNICAL FIELD

The present application relates to photovoltaic power generation and lithium battery energy storage units, for example, a portable photovoltaic array generator set container and a use method thereof.

### BACKGROUND

At present, new energy forms include solar power generation, hydroelectric power generation, bioenergy power generation, wind energy power generation, and the like. In many energy technical routes, the photovoltaic power generation technology features an obvious cost advantage.

Current solar power generation systems mainly include ground photovoltaic power stations and distributed photovoltaic power stations. Although the power generation capacities of these fixed power stations are considerable, they also have quite a bit congenitally deficient disadvantages, such as a large occupied area required, a long construction period, relatively high manual cost, inability of moving the power stations at fixed sites to sites in emergent need of power and the like. In order to solve various problems of the above conventional power stations, it is an urgent need for a folding portable photovoltaic array generator set container having the advantages of being portable, rapid to deploy, small in occupied area, and the like.

### SUMMARY

In order to overcome deficiencies in the above background, the present application provides a folding portable photovoltaic array generator set container and a use method thereof.

An embodiment of the present application provides a portable photovoltaic array generator set container, including a container, a folding photovoltaic power generation unit receivable in the container, a rail assembly through which the folding photovoltaic power generation unit traverses, and an electrical device, where the folding photovoltaic power generation unit includes a plurality of frames, a plurality of solar photovoltaic assemblies fixed in each of the frames, a hinge assembly, and a traversing assembly; every two frames form a group, and the hinge assembly is connected to an upper end of a connection between one group of frames, so that the group of frames are foldable; the traversing assembly is arranged at a lower end on each side of the group of frames, are foldable with another group of frames, and traverses along the rail assembly; and the folding photovoltaic power generation unit further includes a limiting assembly for limiting a stretching angle of each group of frames.

An embodiment of the present application further provides a working method for unfolding a portable photovoltaic array generator set container, where the method includes:
transporting and placing a container at a specified site;
opening a door of the container, taking down two lower latch square tubes below a folding photovoltaic power generation unit and placing the latch square tubes below the folding photovoltaic power generation unit, synchronously jacking up the two lower latch square tubes with four jacks to take out four battens, letting caster wheels of the folding photovoltaic power generation unit to fall on a lower guide rail, paving a trail assembly in the container outward, paving a transfer guide rail first, and then paving a guide rail bracket and a guide rail;
pulling out bolts that fix the folding photovoltaic power generation and unfolding the folding photovoltaic power generation unit; pulling out folded frames to enable an angle limiting steel cable to limit at 15 degrees;
after unfolding the folding photovoltaic power generation unit in place, respectively installing baffle plates at head and tail ends of the rail assembly to limit two groups of frames at the head and tail ends;
removing the transfer guide rail close to the container;
installing S-shaped fixed hooks to fix the two groups of frames;
taking down a box cover of a wire hole, and threading the power cable of the folding photovoltaic power generation unit through the wire hole to be connected to inverters; and
turning on each switch of the electrical device, and closing the door of container after normal power generation to complete installation.

An embodiment of the present application further provides a method for recovering and transferring a portable photovoltaic array generator set container, including:
opening a door of a container, turning off each switch of an electrical device, disconnecting and pulling out a power cable through which a folding photovoltaic power generation unit and inverters are connected, and extracting the power cable from a wire hole;
installing a box cover of the wire hole on a side door of the container, and connecting a guide rail to the container by using a transfer guide rail; inserting a sleeve traction tube on a frame and installing a traction steel wire rope;
starting an electric winch, packing up the frame in the container, and inserting an upper latch to fix and limit;
respectively paving pearl cotton on a front surface, a left surface, and a right surface of the folding photovoltaic power generation unit, and arranging three step-by-step tightening straps on the folding photovoltaic power generation unit to tighten the folding photovoltaic power generation unit;
placing two lower latch square tubes below the folding photovoltaic power generation unit, contacting the two lower latch square tubes with four jacks to jack up the folding photovoltaic power generation unit, uniformly placing four battens below the folding photovoltaic power generation unit, two of the battens being respectively placed on two side edges of the folding photovoltaic power generation unit, dropping the jacks to enable the folding photovoltaic power generation unit to press the four battens, and inserting the two lower latch square tubes into a square on the lower side of a side surface of the frame 11 through bolts;
receiving the detached rail assembly in the container and fixing the detached rail assembly; and
after closing the door of the container, recovering and transferring the container with a truck with crane.

### BRIEF DESCRIPTION OF THE DRAWINGS

FIG. 1 is a schematic diagram of an unfolded portable photovoltaic array generator set container provided by an embodiment of the present application;
FIG. 2 is a schematic diagram of three groups of frames intercepted;
FIG. 3 is a schematic diagram of a single frame;
FIG. 4 is a schematic diagram of a single group of frames;
FIG. 5 is a side view of the single group of frames;
FIG. 6 is a partial view of a traversing assembly and a limiting assembly;
FIG. 7 is a schematic diagram of a limiting steel cable of the traversing assembly at a connecting angle;
FIG. 8 is a schematic diagram of a connection among a guide rail, a baffle plate, and a guide rail bracket;
FIG. 9 is a schematic diagram of a connection of a rail;
FIG. 10 is a schematic diagram of the baffle plate at a 45-degree angle; FIG. 11 is a schematic diagram of a sleeve traction tube;
FIG. 12 is a layout schematic diagram of an electrical device;
FIG. 13 is an external schematic diagram of a container;
FIG. 14 is an internal schematic diagram of the container;
FIG. 15 is a wiring diagram of an electrical connection in the present application;
FIG. 16 is a block diagram of a hybrid system in one of different application forms in the present application;
FIG. 17 is a block diagram of an on-grid system in one of different application forms in the present application;
FIG. 18 is a block diagram of an off-grid system in one of different application forms in the present application;
FIG. 19 is a block diagram of a unfolding work flow of the container in the present application; and
FIG. 20 is a flow block diagram of a recovering and transferring flow of the container in the present application.

Reference numerals:
1, folding photovoltaic power generation unit; 2, rail assembly; 3, electrical device; 4, container;
11, frame; 12, limiting assembly; 13, solar photovoltaic assembly; 14, hinge assembly; 15, traversing assembly;
16, longitudinal beam; 17, assembly installation site; 21, guide rail; 22, guide rail bracket; 23, U-shaped latch; 24, transfer guide rail; 31, inverter; 32, energy storage battery; 33, distribution box;
34, power cable;
41; wire hole; 42, suspender; 43, latch square tube; 44, lower guide rail; 45, wallspace installation guide rail; 111, assembly installation fixing plate; 112, top end baffle plate; 113, square tube hole; 121, angle limiting steel cable; 122, suspended steel cable; 123, hoisting ring;
124, limiting ring; 125, fixed head; 151, large C-shaped frame; 152, wheel axle bolt; 153, caster wheel; 154, limiting hoisting ring nut; 155, small C-shaped frame; 221, ground installation plate;
222, ground sign; 223, guide rail support frame; 224, baffle plate; 225, S-shaped fixed hook.

### DETAILED DESCRIPTION OF THE EMBODIMENTS

The present application will be further described below in conjunction with drawings.

The specific embodiments are merely used to explain the present application. Those skilled in the art can make modifications on the embodiments without creative contributions as needed after reading the description, but the modifications within the scope of the claims of the present application all are protected by the patent law.

In the description of the present application, it is to be understood that the terms "central", "longitudinal", "transverse", "length", "width", "thickness", "upper", "lower", "front", "back", "left", "right", "vertical", "horizontal", "top", "bottom", "inner", "outer", "clockwise", " counterclockwise", "axial", "radial", "circumferential", etc. indicate azimuthal or positional relations based on those shown in the drawings only for ease of description of the present application and for simplicity of description, and are not intended to indicate or imply that the referenced device or element must have a particular orientation and be constructed and operative in a particular orientation.

In addition, the terms "first" and "second" are merely used for descriptive purposes and cannot be construed as indicating or implying relative importance or implicitly specifying the number of indicated technical features. Thus, features defining "first" and "second" can expressively or implicitly include one or more features. In the description of the present application, "a plurality of" means two or more, unless expressly specified otherwise.

In the present application, unless otherwise expressly specified and limited, the terms such as "mount" "connected", "connect", "fix" and the like should be understood broadly, which, for example, may refer to a fixed connection, a detachable connection, or an integral connection; which may refer to a mechanical connection or an electrical connection; which may refer to a direct connection or an indirect connection via an intermediary medium; which may also refer to a communication between the insides of two elements or an interaction relationship between two elements. Persons of ordinary skill in the art may understand the specific meanings of the foregoing terms in the present application according to specific situations.

In the present application, unless otherwise expressly specified and limited, a first feature being "on" or "under" a second feature may mean that the first feature makes direct contact with the second feature or that the first feature makes indirect contact with the second feature by means of an intermediary medium. Further, a first feature being "over,""above," and "on" a second feature may mean that the first feature is directly above or obliquely above the second feature, or simply mean that the first feature is higher than the second feature. The first feature being "below,""under," and "beneath" the second feature may mean that the first feature is directly below or diagonally below the second feature, or simply mean that the first feature is lower than the second feature.

### Embodiments:

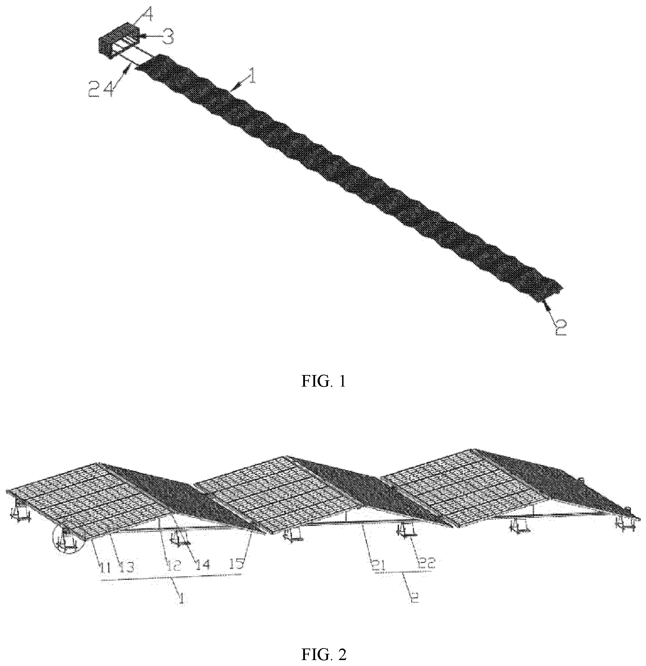

A portable photovoltaic array generator set container stretching out is shown in FIG. 1, and three groups are intercepted, as shown in FIG. 2, including a plurality of folding photovoltaic power generation units 1, a rail assembly 2 through which the folding photovoltaic power generation units 1 traverse, and an electrical device 3; after the plurality of folding photovoltaic power generation units 1 are connected, the portable photovoltaic array generator set container are foldable or stretchable with the assistance of the rail assembly 2. The portable photovoltaic array generator set container stretching, as shown in FIG. 1, is capable of generating electricity, and is capable of being stored after being folded.

As shown in FIG. 2, the folding photovoltaic power generation unit 1 includes a plurality of frames 11. A plurality of solar photovoltaic assemblies 13 fixed in each of the frames 11, a hinge assembly 14, and a traversing assembly 15.

Every two frames 11 form one group, one group of frames 11 forms a reverse V shape, and a plurality of reverse V shapes are connected together to form a whole folding portable photovoltaic array power generation assembly. The hinge assembly 14 is connected to an upper end of a connection between the one group of frames 11, so that the one group of frames 11 is capable of adjusting an opening of the reverse shape to be folded; the traversing assembly 15 is arranged at a lower end on each side of the one group of frames 11, are foldable with another group of frames 11, and traverses along the rail assembly 2, so as to provide assisted folding.

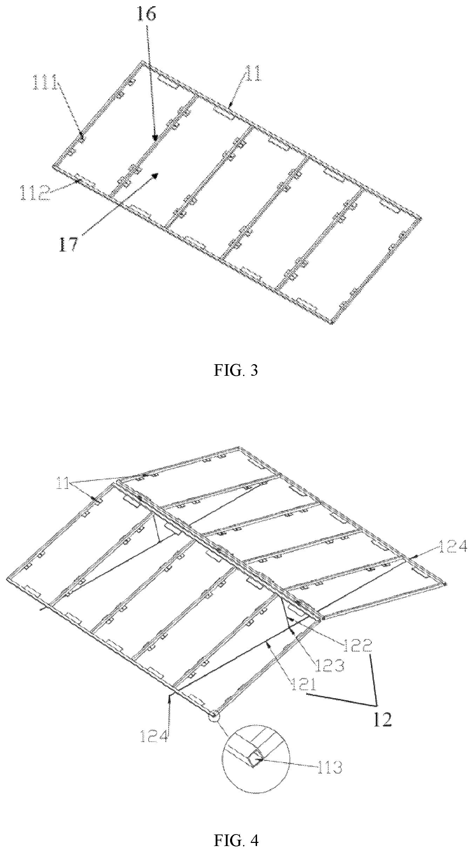

FIG. 3 is a schematic diagram of a frame 11. The frame 11 is provided with a plurality of longitudinal beams 16, so that one frame 11 is divided into a plurality of assembly installation sites 17; each of the assembly installation sites 17 is provided with a top end baffle plates 112 and an assembly installation fixing plate 111; and the solar photovoltaic assemblies 13 are fixed to the top end baffle plates 112 and the assembly installation fixing plate 111 through bolts. That is, one frame 11 is correspondingly provided with the plurality of solar photovoltaic assemblies 13, so that the light irradiation area is larger, and the generated power is higher. The frame 11 is welded in a shape of a Chinese character "mu". Each small frame is the assembly installation site 17. A circle of assembly installation plates is welded to the edge of the frame 11. Assemblies are placed in the frame 11 and are connected to the assembly installation plates through bolts. The installation holes are waist-type holes, so that an installation problem caused by errors can be avoided to the maximum extent.

FIG. 4 is a schematic diagram of a reverse V shape formed by one group of frame 11, and the folding photovoltaic power generation unit 1 further includes a limiting assembly 12 for limiting a stretching angle of each group of frames 11. The installation position of the limiting assembly 12 can also be seen in FIG. 4.

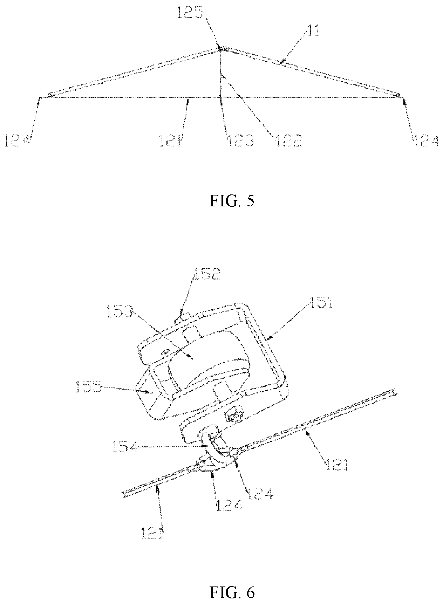

In combination with FIG. 5, the limiting assembly 12 includes an angle limiting steel cable 121, limiting rings 124 are arranged on both ends of the angle limiting steel cable 121, the traversing assembly 15 is provided with limiting hoisting ring nuts 154 (as shown in FIG. 6), and the two limiting rings 124 are respectively fixed to two limiting hoisting ring nuts 154 of one group of frames 11 to limit the stretching angle of one group of frames 11.

Exemplarily, one lower end of the reverse V-shaped frame 11 is provided with two traversing assemblies 15, the two traversing assemblies 15 move on the two guide rails 21, respectively, the other lower end of the reverse frame 11 is also provided with two traversing assemblies 15 which move on the two guide rails 21, respectively, each of the traversing assemblies 15 is provided with a limiting hoisting ring nut 154, and the two limiting rings 124 of the angle limiting steel cable 121 are fixedly connected to the two limiting hoisting ring nuts 154 of the same guide rail 21, respectively. In combination with FIG. 5, after one group of frames 11 stretches, the unfolded angle is fixed as a result of the fixed length of the angle limiting steel cable 121, i.e., after the angle limiting steel cable 121 is completely straightened, one group of frames 11 is completely unfolded, and the length of the angle limiting steel cable 121 is set, so that the angle between the frame 11 and the guide rail 21 is 15 degrees.

In an embodiment, the limiting assembly 12 further includes a suspended steel cable 122, a fixed head 125 is arranged at an upper end of the suspended steel cable 122, the fixed head 125 is fixed to a top end of one group of frames 11, for example, the fixed head 125 is fixed at the top end of one frame 11, a draw ring 123 is arranged at a lower end of the suspended steel cable 122, and the angle limiting steel cable 121 penetrates through the draw ring 123.When being stored and folded, the opening of the reverse V-shaped frame 11 is lessened, the fixed head 125 raises with a tip of the V shape, and the middle of the angle limiting steel cable 121 is raised by using the suspended steel cable 122, so that the angle limiting steel cable 121 is packed up synchronously to prevent the angle limiting steel cable 121 from winding during folding.

The suspended steel cable 122 is a steel wire, one end of which is a safe fast hook buckle as a pull ring 123 and the other end is a circular pressure head as a fixed head 125.The circular pressure head is fixed to an upper portion of the frame 11 with a self-tapping screw, the safe fast hook end is buckled at the angle limiting steel cable 121, and the angle limiting steel cable 121 can be packed up when the frame 11 needs to be packed up and folded, so that the angle limiting steel cable does not fall onto the ground.

As shown in FIG. 6, the traversing assembly 15 includes a large C-shaped frame 151 fixedly connected to the lower end of one group of frames 11, a small C-shaped frame 155 fixedly connected to the lower end of another group of frames 11, and caster wheels 153, where the small C-shaped frame 155 is located in the large C-shaped frame 151, the caster wheels 153 are located in the small C-shaped frame 155, and the small C-shaped frame 155, the large C-shaped frame 151, and the caster wheels 153 are connected and fixed by using the wheel axle bolts 152; a sleeve is installed between the large C-shaped frame 151 and the small C-shaped frame 155 as a support, and the limiting hoisting ring nut 154 is arranged on an outer side of the large C-shaped frame 151; and the caster wheels 153 are arranged on a guide rail 21 of the rail assembly 2 to roll and traverse. The limiting hoisting ring nut 154 is arranged on the outer side of the large C-shaped frame 151, for example, the limiting hoisting ring nut is fixed to the outer side of the large C-shaped frame 151 through a hexagonal head bolt; the caster wheels 153 are arranged on the guide rail 21, and the caster wheels 153 are 3-inch nylon industrial caster wheels to reduce friction when the folded frame 11 is unfolded, so that the folded frame is unfolded more smoothly.

The traversing assembly 15 is connected to bottom ends of the two frames 11 at the same time, so that the caster wheels 153 can be used for traversing, and the large C-shaped frame 151 and the small C-shaped frame 155 can be used for folding the two adjacent frames 11. The two functions are combined in one part, so that the occupied space is saved, and the distance between the two frames 11 is shortened.

The same limiting hoisting ring nut 154 is connected to the limiting rings 124 of the two angle limiting steel cables 121 to limit the stretching angle of the frame 11.The angle limiting steel cable 121 is a steel wire rope, both ends of which are safe fast hook buckles as the limiting rings 124.The limiting rings 124 of the angle limiting steel cable 121 are respectively connected to one frame 11, so that the end surface of the unfolded frame 11 is triangular, which guarantees the angle limitation of the assembly at 15 degrees.

In the embodiment, the hinge assembly 14 is in the form of hinge, including a first connecting plate and a second connecting plate. The first connecting plate and the second connecting plate are connected with a hinge shaft. The first connecting plate and the second connecting plate are respectively connected to the two adjacent frames 11 to fold the frames in the form of hinge. Both the first connecting plate and the second connecting plate are formed by bending galvanized carbon steel and are connected with a bolt sleeve as the hinge shaft.

In the embodiment, the large C-shaped frame 151 and the small C-shaped frame 155 are welded to the bottom as wheel installation frames for installing the caster wheels 153. The spacing between the wheel in stallion frames is slightly wider than the width of the guide rail 21 for transverse limitation when the wheels roll. The two frames 11 are connected in one group through the hinge. Two wheel installation frames are welded to the bottom of each group of frames 11. A wide installation frame is welded to the frame 11 on one side and a narrow installation frame is welded to the frame on the other side.

The two groups of folding frames 11 connected end to end are provided with the caster wheels 153 which are 3-inch nylon industrial caster wheels 153 to form a set of folding frame system. When the folding frames 11 are unfolded, the caster wheels 153 can reduce friction, so that the frames are unfolded more smoothly.

The solar photovoltaic assemblies 13 are placed in the assembly installation sites 17 in the frames 11 and are fastened with bolts.

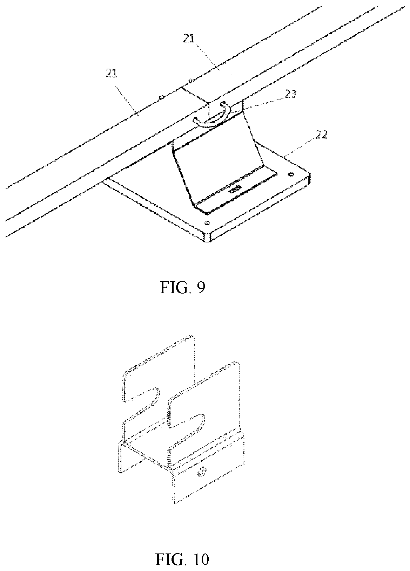

As shown in FIG. 2, the rail assembly 2 includes a plurality of sections of guide rails 21, a guide rail bracket 22, and U-shaped latches 23 (shown in FIG. 9), every two sections of guide rails 21 are fixed to the guide rail bracket 22 through the U-shaped latches 23, and the traversing assembly 15 is arranged on the guide rails 21 to roll. The rail assembly is placed in the middle. The wheel fixing frame formed by the large C-shaped frame 151, the small C-shaped frame 155 plays a limiting role on both sides of the guide rail 21.The plurality of sections of guide rails 21 are connected to the guide rail bracket 22 through U-shaped square clips and are fixed with bolts, with round holes formed in both ends. The guide rail bracket 22 is formed by bending a galvanized carbon steel plate in an "n"-shape.

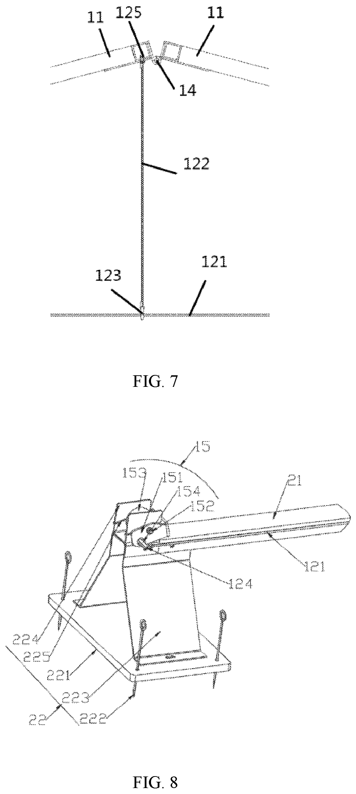

As show in FIG. 8, the guide rail bracket 22 includes a ground installation plate 221, the ground installation plate 221 is fixed to the ground with a ground sign 222, the ground installation plate 221 is connected and fixed to a guide rail support frame 223 through bolts, and the guide rail 21 is fixed to the guide rail support frame 223.Wheel axle bolts 152, baffle plates 224, and S-shaped fixed hooks 225 are arranged at head and tail ends of the rail assembly 2, for example, the baffle plates 224 can be fixed with U-shaped latches, the caster wheels 153 of the two groups of frames 11 at the head and tail ends move into the baffle plates 224, the wheel axle bolts 152 move and are clamped into stop slots of the baffle plates 224, first ends of the S-shaped fixed hooks 225 hook the baffle plates 224, and second ends of the S-shaped fixed hooks 225 hook the wheel axle bolts 152 to limit and fix the two groups of frames 11 at the head and tail ends. As shown in FIG. 2, the left circle area in the figure can be the head end or the tail end. After the frames 11 stretch, the two groups of frames at the head end and the tail end are the outermost two groups of frames 11. Moving to the positions of the baffle plates 224, the wheel axle bolts 152 are hooked with the S-shaped fixed hooks 225, so that the outermost frame 11 is fixed, thereby preventing displacement due to reasons such as environment.

FIG. 10 is a schematic diagram of the baffle plate 224 at a 45-degree angle. "H"-shaped stop catches are welded at the head end and the tail end of the rail assembly 2 with galvanized carbon steel as the baffle plates 224 for limiting the length direction of the folding frame 11. After the frame 11 is unfolded completely, the folding frame 11 is fixed with the S-shaped fixed hooks 225 at both ends, thereby guaranteeing that the frame is not displaced due to external causes such as weather. After the frame 11 is unfolded completely, the stop catches at the ends of the rail assembly 2 limit the frame in the length direction. The baffle plate 224 is an "H"-shaped weldment welded with galvanized carbon steel, and is provided with a U-shaped opening. The baffle plate is fixed at the end of the rail assembly 2 with the U-shaped square clip. The outermost two groups of wheel axle bolts 152 of the folding frame are clamped into the openings of the stop catches and are fixed with the S-shaped fixed hooks 225 to fix the position of the group of folding frames.

The ground installation plate 221 is fixed to the guide rail support frame 223 by reversely driving countersunk bolts, the ground installation plate 221 is fixed to the ground with the ground sign 222, and the guide rail 21 is paved on the guide rail support frame 223.

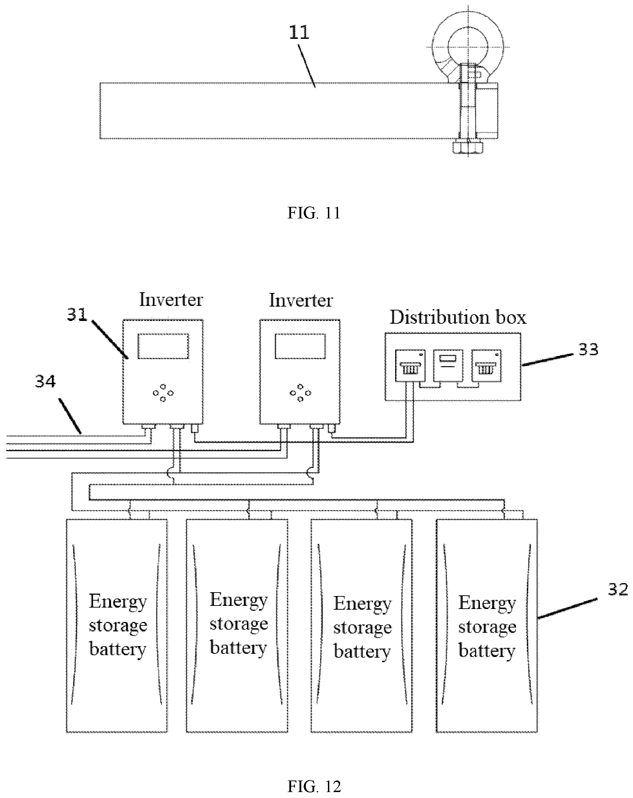

Square tube holes 113 are formed in upper and lower ends of the outer side of the frame 11 (shown in FIG. 4), the sleeve traction tube can be installed in the lower square tube hole 113 (shown in FIG. 11), a hoisting ring nut is arranged at an end of the sleeve traction tube, the sleeve traction tube is inserted into the square tube hole 113 in the side surface of the frame 11, and the hoisting ring nut can be used for installing a traction steel wire rope. When it is needed to move the power generation unit to other sites, the sleeve traction tube is sleeved into the square hole in the side surface of the frame 11, the traction steel wire rope is buckled to the hoisting ring nut with the safe fast buckle, and the traction steel wire rope is pulled by an electric winch, so the folding assembly will transit from an unfolded state to a closed state under the action of a traction force.

After being completely packed up, the group of folding frames is pushed back to the rail of the container 4, and a dowel is re-inserted to fix the frame 11 and the square tube above the container 4, thereby guaranteeing that the frame 11 does not slip and loosen.

The container 4 is internally equipped with a folding portable photovoltaic array generator set container. The container 4 is internally provided with two inverters 31. Based on different inclination directions of the frame 11, the folding portable photovoltaic array power generation assembly can be divided into two groups which are respectively connected to the two inverters 31. The electrical device 3 is arranged in the container 4. In combination with FIG. 12, the electrical device includes a plurality of inverters 31, an energy storage battery 32, a distribution box 33, and a power cable 34; after series-parallel connection of the plurality of solar photovoltaic assemblies 13 through the power cable 34, the plurality of solar photovoltaic assemblies are respectively connected to the plurality of inverters 31, after series-parallel connection of the energy storage battery 32 through the power cable 34, the energy storage battery is connected to the plurality of inverters 31, and each of the inverters 31 is connected to the distribution box 33 through the power cable 34, and the distribution box 33 is connected to a distribution box at a load side through an alternating current output cable; and finally, the electrical device 3 electrically connect the folding photovoltaic power generation unit 1 to form a power generation loop connected to a load to supply electricity.

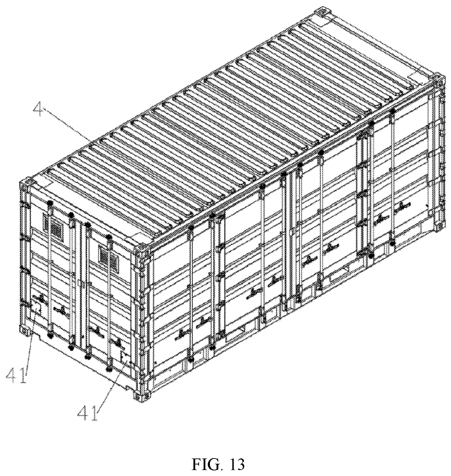

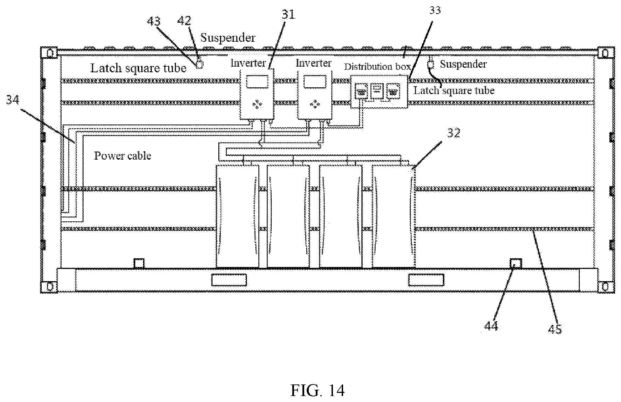

As shown in FIG. 13, a wire hole 41 formed in a side door of the container 4; in combination with FIG. 14, the container 4 internally includes a suspender 42, a latch square tube 43, a lower guide rail 44, and a wallspace installation guide rail 45; the suspender 42 and the latch square tube 43 are welded and fixed to the top inside the container 4; the lower guide rail 44 is welded and fixed to the bottom inside the container 4; and the wallspace installation guide rail 45 is a porous guide rail and is welded and fixed to a wallspace inside the container 4.

After being folded and contracted, the folding photovoltaic power generation unit 1 is pushed to the lower guide rail 44 in the container 4 through the transfer guide rail 24 and is fixed to the latch square tube 43 through the latch; the plurality of inverters 31, the energy storage battery 32, and the distribution box 33 are respectively installed and fixed to the wallspace installation guide rail 45 through bolts; and the power cable 34 electrically connects the plurality of solar photovoltaic assemblies 13 and the plurality of inverters 31 through the wire hole 41.

The two wire holes 41 respectively correspond to the two inverters 31 and the alternating current output cable connected by the distribution box 33. Connecting cables between the folding portable photovoltaic array power generation assembly and the inverters 31 pass through the wire holes 41.The wire holes 41 are formed at corners, close to one side of a door rotating shaft, of double doors, so that after wiring, the wire holes still do not affect opening and closing of the double doors. A wire through area is arranged as a concave box body. Two round tube through wires are installed on the box body. The side of the round tube close to the interior of the box inclines upward to prevent water ingress of the container 4. The lower surface of the box body is also arranged obliquely to prevent water ingress. A cover is arranged on the outer side of the box body and is fastened with bolts. During transportation, the box is covered tightly to prevent water vapor from corroding internal devices. The bolts are taken down when wires are installed, so that the wires of the cover can be taken down.

The suspender 42 is arranged at the top of the container 4, a small hole is formed in the latch square tube 43, and a dowel is connected to the square tube hole 113 of the folding frame 11 to limit the upper side and the bottom of the frame 11 during transportation; the rail is arranged at the bottom of the container 4, an opening is formed in the side, close to the door, of the rail, where the guide rail 21 can be connected, and after the folding frame 11 is unfolded, the folding frame is moved from the container 4 to an outdoor site through the guide rail 21.The container 4 is opened on three surfaces, with two short surfaces being double doors, and a long surface being a four-surface folding door. A ventilation opening is formed in the double doors, and an insect and mouse preventing net is installed inside the ventilating opening. The wire holes 41 are formed at a corner, close to the inverters 31, on a side wall in the container 4 where the inverters 31 are installed, and an openable and closable wiring box cover is arranged outside each of the wire holes 41. During use, the wire holes 41 are opened to wire conveniently, and during transportation, the small door is closed to prevent water ingress. After the folding frame 11 is paved, the transfer guide rail 24 on the side close to the container 4 is removed, the stop catches are arranged to install the folding frame firmly, and assembly cables are connected to the inverters 31 on the inner side of the container 4, so that the doors of the container 4 are close to complete installation. The group of folding frames is jacked up with the jacks, and then battens are inserted under the frames to guarantee the wheels are not damaged during transportation as far as possible. Finally, all rail group parts are detached and packed up, and the doors of the container 4 are closed for transfer.

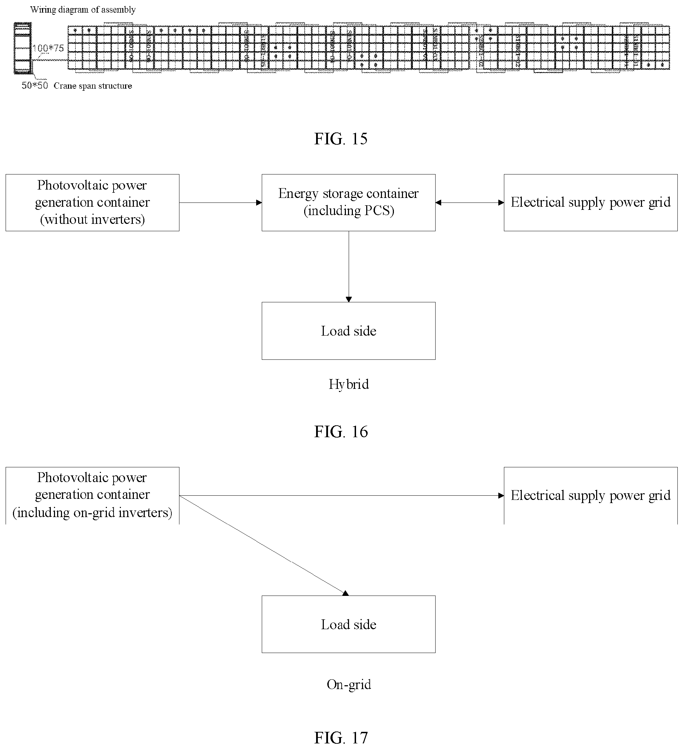

In the embodiment, cables in the solar photovoltaic assemblies 13 are connected in advance, totally 210 cables, which are divided into two groups respectively connected to the two inverters 31 in the inclination direction of the bracket. As shown in FIG. 15, a string of photovoltaic assemblies has a cathode and an anode. Five groups of assemblies (17 assemblies are connected in series in each group) and one group of assemblies (20 assemblies are connected in each group) are connected in parallel in the same inclination direction, and after parallel connection, the cathode is connected to the cathode of the inverter 31 and the anode is connected to the anode of the inverter 31.Wires of the electric winch are also arranged. An emergency mobile power supply is equipped in the container 4 for supplying power to the electric winch during installation and storage; the inverters 31 are two 40 kW inverters which are installed on the double doors on the end surface of the container 4. Wire cables pass through the wire holes 41 in the double doors of the container 4 and are connected to the assemblies.

The present application can work in three different modes: energy storage type, on-grid and off-grid. The present application is not limited to on-grid power generation, can charge the energy storage container and also can be used as an independent power supply.

FIG. 16 is a schematic diagram of a hybrid power generation in the present application. After mechanical structures of the assemblies of the photovoltaic power generation container are installed and electrical connections are completed, power generated by the assemblies through illumination is transmitted to the energy storage container through the cables. A process control system (PCS) in the energy storage container preferentially supplies a direct current generated photovoltaically to the energy storage battery of the container for charging; the load is connected to the energy storage container through a wire cable, and the load is powered by the energy storage battery in the energy storage container at this time; after the energy storage battery is fully charged, the control system will switch from an energy storage battery charging mode to the on-grid mode, and the direct current generated photovoltaically is converted into an alternating current through the PCS system to transmit power to a power grid.

FIG. 17 is a schematic diagram of on-grid power generation in the present application. After mechanical structures of the assemblies of the photovoltaic power generation container are installed and electrical connections are completed, power generated by the assemblies through illumination is transmitted to the inverters through the cables. The control system in the inverters will preferentially meet the electricity demand of a load side and dynamically deploy the electric quantity supplied to an electric supply according to a condition of the load. The converters convert the direct current generated photovoltaically into the alternating current which is supplied to an electricity using side and a grid-connected end.

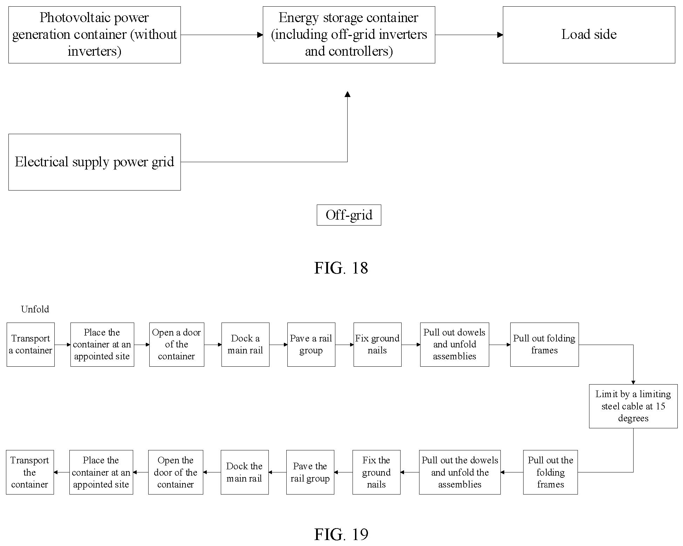

FIG. 18 is a schematic diagram of an off-grid power generation in the present application. After mechanical structures of the photovoltaic power generation container, the energy storage container, the electric supply, and the load are installed and the electrical connections are completed, the assemblies transmit power generated by illumination to the energy storage container through the cables, and the off-grid inverters and the controller system in the energy storage container convert the direct current generated photovoltaically into the alternating current used at the load side; when the photovoltaic power generation container does not generate power and the electric quantity of the battery in the energy storage container is insufficient, the electric supply power grid supplies power to the load while charging the battery in the energy storage container through the inverters and the controller in the energy storage container.

As shown in FIG. 19, the embodiment of the present application provides a working method for unfolding a portable photovoltaic array generator set container, including:
a container 4 is transported and placed at a specified site;
a door of the container 4 is opened, two lower latch square tubes 43 below a folding photovoltaic power generation unit 1 are taken down and placed below the folding photovoltaic power generation unit 1, the two lower latch square tubes 43 are synchronously jacked up with four jacks to take out four battens, caster wheels 153 of the folding photovoltaic power generation unit 1 fall on a lower guide rail 44, a trail assembly 2 in the container (4) is paved outward, a transfer guide rail 24 is paved first, and then a guide rail bracket 22 and a guide rail 21 are paved;
bolts that fix the folding photovoltaic power generation 1 are pulled out and the folding photovoltaic power generation unit 1 is unfolded; folded frames 11 are pulled out to enable an angle limiting steel cable 121 to limit at 15 degrees;

After the folding photovoltaic power generation unit 1 is unfolded in place, baffle plates 224 are respectively installed at head and tail ends of the rail assembly 2 to limit two groups of frames 11 at the head and tail ends;
the transfer guide rail 24 close to the container 4 is removed;
S-shaped fixed hooks 225 are installed to fix the two groups of frames 11 at the head and tail ends;
a box cover of a wire hole 41 is taken down, and the power cable 34 of the folding photovoltaic power generation unit 1 passes through the wire hole 41 to be connected to inverters 31; and
each switch of the electrical device 3 is turned on, and the door of container 4 is closed after normal power generation to complete installation.

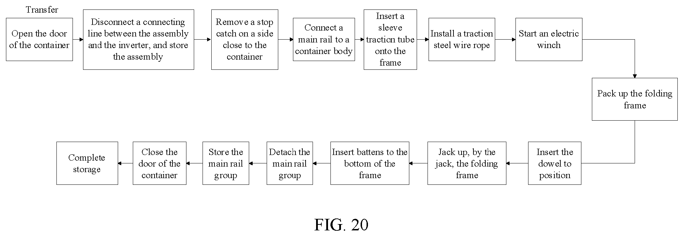

As shown in FIG. 20, the embodiment of the present application provides a method for recovering and transferring a portable photovoltaic array generator set container including:
a door of a container 4 is opened, each switch of an electrical device 3 is turned off, a power cable 34 through which a folding photovoltaic power generation unit 1 and inverters 31 are connected is disconnected and pulled out, and the power cable 34 is extracted from a wire hole 41;
a box cover of the wire hole 41 is installed on a side door of the container 4, and a guide rail 21 is connected to the container 4 by using a transfer guide rail 24;
a sleeve traction tube is inserted onto a frame 11 and a traction steel wire rope is installed;
an electric winch is started, the frame 11 is packed up in the container 4, and an upper latch is inserted to fix and limit;
pearl cotton is respectively paved on a front surface, a left surface, and a right surface of the folding photovoltaic power generation unit 1, and three step-by-step tightening straps are arranged on the folding photovoltaic power generation unit 1 to tighten the folding photovoltaic power generation unit 1;
two lower latch square tubes 43 are placed below the folding photovoltaic power generation unit 1, the two lower latch square tubes 43 contact with four jacks to jack up the folding photovoltaic power generation unit 1, four battens are uniformly placed below the folding photovoltaic power generation unit 1, two of the battens are respectively placed on two side edges of the folding photovoltaic power generation unit 1, the jacks are dropped to enable the folding photovoltaic power generation unit 1 to press the four battens, and the two lower latch square tubes 43 are inserted into a square on the lower side of a side surface of the frame 11 through bolts;
the detached rail assembly 2 is received in the container 4 and the detached rail assembly is fixed; and
after the door of the container 4 is closed, the container is recovered and transferred with a truck with crane.

To sum up, the present application achieves the following technical effects:

The photovoltaic array in the present application is integrated in the container, so that the present application features a high integrated modular degree, convenient transportation, and simple installation;

In the present application, the folding frames are welded with the galvanized square tubes, the photovoltaic assemblies are installed on the folding frames, hinges are welded to the tops of the frames 11 to complete folding, and the industrial caster wheels are installed at the bottoms for the convenience of unfolding and translating the frames 11; every two frames 11 form one group, each group of frames 11 is connected with the steel wire rope to form the triangle, so that the frames are fixed and the angle at 15 degrees can be limited, and the suspended steel cable 122 with one end being the safe fast hook buckle and the other end being the circular pressure head is used; the circular pressure head end is fixed to the upper portion the frame 11 with the self-tapping screw, the safe fast hook end is buckled on the angle limiting steel cable 121, and when it is needed to pack up the folding frames, the limiting steel cable can be packed up, so that the limiting steel cable does not fall onto the ground; the "H"-shaped stop catches are installed at the head end and the tail end of the rail assembly 2 for limiting the length direction of the folding frame 11; and the folding frame 11 is fixed with the S-shaped fixed hooks 225 at both ends, thereby guaranteeing that the frame is not displaced due to external causes such as weather.

In the present application, when it is needed to generate electricity, only a space is needed. After the container is conveyed in place, the folding units are unfolded to generate electricity; in a case that the power station is moved to other places due to various reasons such as weather, expiration of site, and plan change, it is only needed to pack up the folding units and place them back in the container, and the container is transported to a new site for reinstallation and use; the installed folding photovoltaic power generation units can be directly combined to the power grid for use and can also match with the energy storage container in an off-grid manner, so that the folding photovoltaic power generation units are wide in application scenario, convenient to install and convenient to transport, break through the shackle that currently used common ground power stations and distributed power stations are hardly moved in terms of physical position, achieve applications in various environments, and boast better portability.

## Claims

1. A portable photovoltaic array generator set container, comprising a container (4), a folding photovoltaic power generation unit (1) receivable in the container (4), a rail assembly (2) through which the folding photovoltaic power generation unit (1) traverses, and an electrical device (3), wherein the folding photovoltaic power generation unit (1) comprises a plurality of frames (11), a plurality of solar photovoltaic assemblies (13) fixed in each of the frames (11), a hinge assembly (14), and a traversing assembly (15); every two frames (11) form a group, and the hinge assembly (14) is connected to an upper end of a connection between one group of frames (11), so that the group of frames (11) are foldable; the traversing assembly (15) is arranged at a lower end on each side of the group of frames (11), foldable with another group of frames (11), and is arranged to traverse along the rail assembly (2); and the folding photovoltaic power generation unit (1) further comprises a limiting assembly (12) for limiting a stretching angle of each group of frames (11).

2. The portable photovoltaic array generator set container according to claim 1, wherein each of the frames (11) is provided with a plurality of longitudinal beams (16), so that one frame (11) is divided into a plurality of assembly installation sites (17); each of the assembly installation sites (17) is provided with a top end baffle plates (112) and an assembly installation fixing plate (111); and the solar photovoltaic assemblies (13) are fixed to the top end baffle plates (112) and the assembly installation fixing plate (111) through bolts.

3. The portable photovoltaic array generator set container according to claim 1, wherein the limiting assembly (12) comprises an angle limiting steel cable (121), limiting rings (124) are arranged on both ends of the angle limiting steel cable (121), the traversing assembly (15) is provided with limiting hoisting ring nuts (154), and the two limiting rings (124) are respectively fixed to two limiting hoisting ring nuts (154) of one group of frames (11) to limit the stretching angle of one group of frames (11).

4. The portable photovoltaic array generator set container according to claim 3, wherein the limiting assembly (12) further comprises a suspended steel cable (122), a fixed head (125) is arranged at an upper end of the suspended steel cable (122), the fixed head (125) is fixed to a top end of one group of frames (11), a draw ring (123) is arranged at a lower end of the suspended steel cable (122), and the angle limiting steel cable (121) is arranged to penetrate through the draw ring (123).

5. The portable photovoltaic array generator set container according to claim 4, wherein wheel axle bolts (152), baffle plates (224), and S-shaped fixed hooks (225) are arranged at head and tail ends of the rail assembly (2), caster wheels (153) of the two groups of frames (11) at the head and tail ends are arranged to move into the baffle plates (224), the wheel axle bolts (152) are arranged to move and be clamped into stop slots of the baffle plates (224), first ends of the S-shaped fixed hooks (225) hook the baffle plates (224), and second ends of the S-shaped fixed hooks (225) hook the wheel axle bolts (152) to limit and fix the two groups of frames (11) at the head and tail ends.

6. The portable photovoltaic array generator set container according to claim 1, wherein the traversing assembly (15) comprises a large C-shaped frame (151) fixedly connected to the lower end of one group of frames (11), a small C-shaped frame (155) fixedly connected to the lower end of another group of frames (11), and caster wheels (153), wherein the small C-shaped frame (155) is located in the large C-shaped frame (151), the caster wheels (153) are located in the small C-shaped frame (155), and the small C-shaped frame (155), the large C-shaped frame (151), and the caster wheels (153) are connected and fixed by using the wheel axle bolts (152); a sleeve is installed between the large C-shaped frame (151) and the small C-shaped frame (155) as a support, and the limiting hoisting ring nut (154) is arranged on an outer side of the large C-shaped frame (151); and the caster wheels (153) are arranged on a guide rail (21) of the rail assembly (2) to roll and traverse.

7. The portable photovoltaic array generator set container according to claim 5, wherein the rail assembly (2) comprises a plurality of sections of guide rails (21), a guide rail bracket (22), and U-shaped latches (23), every two sections of guide rails (21) are fixed to the guide rail bracket (22) through the U-shaped latches (23), and the traversing assembly (15) is arranged on the guide rails (21) to roll.

8. The portable photovoltaic array generator set container according to claim 7, wherein the guide rail bracket (22) comprises a ground installation plate (221), the ground installation plate (221) is fixed to the ground by a ground sign (222), the ground installation plate (221) is connected and fixed to a guide rail support frame (223) through bolts, and the guide rails (21) are fixed to the guide rail support frame (223).

9. The portable photovoltaic array generator set container according to claim 1, wherein the electrical device (3) is arranged in the container (4), and the electrical device (3) comprises a plurality of inverters (31), an energy storage battery (32), a distribution box (33), and a power cable (34); after series-parallel connection of the plurality of solar photovoltaic assemblies (13) through the power cable (34), the plurality of solar photovoltaic assemblies are respectively connected to the plurality of inverters (31), wherein after series-parallel connection of the energy storage battery (32) through the power cable (34), the energy storage battery is connected to the plurality of inverters (31), and each of the inverters (31) is connected to the distribution box (33) through the power cable (34); and the electrical device (3) electrically connect the folding photovoltaic power generation unit (1) to form a power generation loop connected to a load to supply electricity.

10. The portable photovoltaic array generator set container according to claim 9, wherein a wire hole (41) is formed in a side door of the container (4); the container (4) internally comprises a suspender (42), a latch square tube (43), a lower guide rail (44), and a wallspace installation guide rail (45); the suspender (42) and the latch square tube (43) are welded and fixed to the top inside the container (4); the lower guide rail (44) is welded and fixed to the bottom inside the container (4); and the wallspace installation guide rail (45) is a porous guide rail and is welded and fixed to a wallspace inside the container (4).

11. The portable photovoltaic array generator set container according to claim 10, wherein the rail assembly (2) further comprises a transfer guide rail (24); after being folded and contracted, the folding photovoltaic power generation unit (1) is pushed to the lower guide rail (44) in the container (4) through the transfer guide rail (24) and is fixed to the latch square tube (43) through the latch; the plurality of inverters (31), the energy storage battery (32), and the distribution box (33) are respectively installed and fixed to the wallspace installation guide rail (45) through bolts; and the power cable (34) electrically connects the plurality of solar photovoltaic assemblies (13) and the plurality of inverters (31) through the wire hole (41).

12. A working method for unfolding a portable photovoltaic array generator set container, comprising:
transporting and placing a container (4) at a specified site;
opening a door of the container (4), taking down two lower latch square tubes (43) below a folding photovoltaic power generation unit (1) and placing the latch square tubes below the folding photovoltaic power generation unit (1), synchronously jacking up the two lower latch square tubes (43) with four jacks to take out four battens, letting caster wheels (153) of the folding photovoltaic power generation unit (1) to fall on a lower guide rail (44), paving a trail assembly (2) in the container (4) outward, paving a transfer guide rail (24) first, and then paving a guide rail bracket (22) and a guide rail (21);
pulling out bolts that fix the folding photovoltaic power generation unit (1) and unfolding the folding photovoltaic power generation unit (1);
pulling out folded frames (11) to enable an angle limiting steel cable (121) to limit at 15 degrees;
after unfolding the folding photovoltaic power generation unit (1) in place, respectively installing baffle plates (224) at head and tail ends of the rail assembly (2) to limit two groups of frames (11) at the head and tail ends;
removing the transfer guide rail (24) close to the container (4);
installing S-shaped fixed hooks (225) to fix the two groups of frames (11) at the head and tail ends;
taking down a box cover of a wire hole (41), and threading the power cable (34) of the folding photovoltaic power generation unit (1) through the wire hole (41) to be connected to inverters (31); and
turning on each switch of the electrical device (3), and closing the door of container (4) after normal power generation to complete installation.

13. A method for recovering and transferring a portable photovoltaic array generator set container, comprising:
opening a door of a container (4), turning off each switch of an electrical device (3), disconnecting and pulling out a power cable (34) through which a folding photovoltaic power generation unit (1) and inverters (31) are connected, and extracting the power cable (34) from a wire hole (41);
installing a box cover of the wire hole (41) on a side door of the container (4), and connecting a guide rail (21) to the container (4) by using a transfer guide rail (24);
inserting a sleeve traction tube on a frame (11) and installing a traction steel wire rope;
starting an electric winch, packing up the frame (11) in the container (4), and inserting an upper latch to fix and limit;
respectively paving pearl cotton on a front surface, a left surface, and a right surface of the folding photovoltaic power generation unit (1), and arranging three step-by-step tightening straps on the folding photovoltaic power generation unit (1) to tighten the folding photovoltaic power generation unit (1);
placing two lower latch square tubes (43) below the folding photovoltaic power generation unit (1), contacting the two lower latch square tubes (43) with four jacks to jack up the folding photovoltaic power generation unit (1), uniformly placing four battens below the folding photovoltaic power generation unit (1), two of the battens being respectively placed on two side edges of the folding photovoltaic power generation unit (1), dropping the jacks to enable the folding photovoltaic power generation unit (1) to press the four battens, and inserting the two lower latch square tubes (43) into a square on the lower side of a side surface of the frame (11) through bolts; and
receiving the detached rail assembly (2) in the container (4) and fixing the detached rail assembly; and after closing the door of the container (4), recovering and transferring the container with a truck with crane.
